# EUROPÄISCHE PATENTSCHRIFT

(11) **EP 3 293 551 B1**
(45) Veröffentlichungstag und Bekanntmachung des Hinweises auf die Patenterteilung: **23.10.2019**
(21) Anmeldenummer: 17186244.4
(22) Anmeldetag: 15.08.2017
(51) Int. Cl.: G01V 8/20

(54) **LICHTVORHANG**
LIGHT CURTAIN
RIDEAU LUMINEUX

(30) Priorität: 08.09.2016 DE 102016116835; 04.08.2017 DE 102017117693
(43) Veröffentlichungstag der Anmeldung: 14.03.2018
(73) Patentinhaber: SICK AG, 79183 Waldkirch (DE)
(72) Erfinder: EBLE, Johannes, 79183 Waldkirch (DE); MATT, Sebastian, 79106 Freiburg (DE)

(56) Entgegenhaltungen:
- EP-A1- 2 869 095
- DE-U1- 20 211 946
- US-A1- 2003 103 347
- US-A1- 2013 292 554

## Beschreibung

Die vorliegende Erfindung betrifft einen Lichtvorhang entsprechend dem Oberbegriff von Anspruch 1.

Lichtvorhänge weisen typischerweise eine Reihe von Elektronikkarten oder Leiterkarten auf, auf denen Sendeelemente bzw. Sendeoptikmodule bzw. Empfangsoptikmodule angeordnet sind. Diese Reihe von Elektronikkarten wird auch als Kette bezeichnet. Diese Kette wird in einem Gehäuse aus Metall oder Kunststoff beispielsweise an einem Ende fixiert. Lichtvorhänge sind über einen großen Temperaturbereich, teils größer von ΔT = 100°C spezifiziert und sollen die Performance auch in diesem gesamten Bereich erreichen.

Die Elektronikkarte ist beispielsweise aus dem Material FR-4 hergestellt. FR-4 oder auch FR4 bezeichnet eine Klasse von schwer entflammbaren und flammenhemmenden Verbundwerkstoffen bestehend aus Epoxidharz und Glasfasergewebe. Die Abkürzung FR steht für ,flame retardant' (dt. flammenhemmend) und entspricht den Anforderung von UL94V-0.

FR-4 wird unter anderem als elektrisch nicht leitendes Trägermaterial bei elektrischen Elektronikkarten bzw. Leiterplatten eingesetzt. FR-4 weist eine gute Kriechstromfestigkeit und eine geringe Wasseraufnahme auf. Weiterer Vorteil von FR-4 ist die gute Haftbarkeit, welche das dauerhafte Anbringen von Leiterbahnstrukturen aus Kupfer auf dem Trägermaterial gewährleistet.

Das Elektronikkartenmaterial FR-4 besitzt jedoch einen anderen temperaturabhängigen Ausdehnungskoeffizienten als die Gehäusematerialien Metall und Kunststoff. Würden die Elektronikkarten relativ zueinander fixiert aufgebaut und an einem Gehäuseende befestigt, würde sich das zweite oder entgegengesetzte Ende der Kette bei Temperaturänderungen relativ zum zweiten Gehäuseende bewegen. Der Abstand von den letzten Lichtsendern und/oder Lichtempfängern zum Gehäuseende würde variieren, wobei ein sogenannter Blindbereich bis zum Gehäuseende variieren würde.

Außerdem muss ein zusätzlicher Abstand vorgehalten werden, um einerseits eine Ausdehnung der Optikkette im Gehäuse zu gewährleisten und andererseits Toleranzen in der Optikkette und dem Gehäuse aufzufangen.

Gemäß dem Stand der Technik bewegt sich das nicht befestigte Ende der Kette abhängig von der Temperatur relativ zum Gehäuseende, so dass der Abstand zwischen dem Lichtsender und/oder Lichtempfänger am Ende des Gehäuses und dem Gehäuse verändert wird, wodurch eine Detektion von Objekten nicht immer gewährleistet werden kann.

Die US 2013 292554 A1 offenbart ein optisches Modul für eine optische Einheit zur Bildung eines Lichtvorhangs zur Überwachung eines Schutz- oder Überwachungsfeldes. Das optische Modul enthält mindestens ein strahlungsemittierendes und/oder strahlungsempfangendes Element zum Senden und/oder Empfangen eines mit der Bildung eines Lichtvorhangs verbundenen Strahlungsbündels. Das optische Modul enthält einen Modulkörper zur Montage eines Strahlungs-Sender-/Empfängerträgers, der das mindestens eine dem Strahlungsstrahl zugeordnete Sende- und/oder Empfangselement trägt. Der Modulkörper hat mindestens ein Ausrichtelement zum Ausrichten des optischen Moduls innerhalb eines Trägerelements, das ein äußeres Gehäuse der optischen Einheit bildet.

Die DE 202 11 946 U1 offenbart ein Lichtgitter, aufweisend wenigstens eine in einem peripher geschlossenen, einstückigen Hohlprofil aus transluzentem Material längs dessen angeordnete Platine mit einer Leiste von Lichtsendern sowie wenigstens eine in einem weiteren peripher geschlossenen, einstückigen Hohlprofil aus transluzentem Material längs dessen angeordnete Platine mit einer Leiste von Lichtempfängem, bei dem beide Hohlprofile so zueinander ausgerichtet sind, dass die Lichtempfänger Licht von den Lichtsendern empfangen können, bei dem die Unterbrechung wenigstens eines Lichtstrahles von einer Auswerteeinheit erfasst wird, bei dem die Hohlprofile mittels Abdeckkappen an ihren Enden verschlossen sind, und bei dem zwischen den Enden beider Platinen und den jeweiligen Abdeckkappen jeweils wenigstens eine Druckfeder angeordnet ist.

Eine Aufgabe der Erfindung besteht darin, eine Auflösung eines Lichtvorhanges auch an den Randbereichen bei Temperaturwechseln zu generieren.

Die Aufgabe wird gemäß Anspruch 1 gelöst.

Der Lichtvorhang hat den Vorteil, dass der erste Lichtsender und/oder ein Lichtempfänger relativ zum Gehäuseanfang ortsstabil ist und der letzte Lichtsender und/oder Lichtempfänger relativ zum Gehäuseende ortsstabil ist. Damit weist der Lichtvorhang einen konstanten Blindbereich auf. Der Lichtvorhang kann beispielsweise auch kaskadiert werden und gleichzeitig ein Rasterabstand der kaskadierten Lichtsender bzw. Lichtempfänger gewährleistet werden.

In dem Lichtvorhang sind dabei mindestens drei Elektronikkarten oder Leiterplatten angeordnet. Die Fixierung der endseitigen Elektronikkarten kann beispielsweise direkt über ein Loch in der Elektronikkarte und einem Fixierelement im Gehäuse bzw. Gehäuseendstück stattfinden oder indirekt über ein zusätzliches Teil welches, die Elektronikkarte mit dem Gehäuse bzw. dem Gehäuseendstück verbindet. Damit besitzen die ersten bzw. letzten Lichtsender bzw. Lichtempfänger auch bei Temperaturänderungen den gleichen Abstand zum Gehäuseende.

Durch das mechanische Verbindungselement wird ein Abstand zwischen den Elektronikkarten gebildet, so dass sich die Elektronikkarten bei maximaler Temperaturänderung und Worst Case Toleranzen maximal berühren.

Werden drei oder mehr Elektronikkarten verwendet, haben die nicht an den Enden des Gehäuses liegenden Elektronikkarten, abhängig von der Temperatur und den vorliegenden Toleranzen, ein gewisses Spiel, sich längs des Lichtvorhanges zu bewegen. Je mehr Elektronikkarten verwendet werden, umso größer wird der größtmögliche Spalt an einer Position, nämlich dann, wenn alle Elektronikkarten bis auf eine fixierte Elektronikkarte am Ende zusammengeschoben werden würden. Dieser Spalt würde das Auflösungsvermögen des Lichtvorhangs verschlechtern, da die Auflösung vornehmlich vom Abstand der Lichtsender zueinander bzw. der Abstand der Lichtempfänger zueinander bestimmt wird.

Das mechanische Verbindungselement verfügt über mechanische Elemente, welche einen maximalen Abstand zwischen zwei Elektronikarten begrenzen. Weiter weist das mechanische Verbindungselement mechanische Elemente auf, welche einen minimalen Abstand zwischen den Elektronikkarten begrenzen.

Der Maximalabstand ist größer als der Minimalabstand. Damit ist der Maximalabstand und der Minimalabstand nicht identisch.

Die Minimal- und Maximalabstände zwischen den Elektronikarten werden beispielsweise durch Langlöcher in den Elektronikkarten und dem mechanischen Verbindungselement, welches nicht variabel in der Länge ist, gebildet, wobei das mechanische Verbindungselement mit Stiften mit den Langlöchern der Elektronikkarte verbunden ist. Das Langloch definiert zusammen mit dem Stift des mechanischen Verbindungselements die Minimal- und Maximalabstände der Elektronikkarten.

Ein kleiner Blindbereich und dessen garantierte Größe führen dazu, dass der Lichtvorhang bündig an Flächen verbaut werden kann und damit nah an diesen Flächen gemessen werden kann.

Der Lichtvorhang kann dadurch auch platzsparend eingesetzt werden, da die gesamte Länge des Lichtvorhangs nutzbar ist.

In Weiterbildung der Erfindung ist das Verbindungselement einstückig mit der Elektronikkarte verbunden.

Die Gewährleistung des minimalen und maximalen Abstands zwischen den Elektronickarten wird dabei direkt beispielsweise über eine Kontur in der Elektronikkarte gebildet. Hierzu werden die Elektronikkarten beispielsweise in einer Nut des Gehäuses geführt.

In einer bevorzugten Ausführungsform der Erfindung weist das Verbindungselement mindestens ein Federelement auf.

Das Federelement sorgt dafür, dass die Elektronikkarten gegenseitig vorgespannt sind. Dabei sind die Federn beispielsweise als Zugfedern oder Druckfedern ausgebildet. Im Falle von Zugfedern werden die Elektronikkarten zueinander gezogen und im Falle der Druckfedern werden die Elektronikkarten voneinander abgestoßen. Der Abstand zwischen den Elektronikkarten wird durch die Federelemente jedoch definiert voreingestellt, so dass nahezu kein Spiel, beispielsweise aufgrund einer Bewegung, beispielsweise einer Schwing-/Schock Belastung vorhanden ist.

Das mechanische Verbindungselement kann auch zweiteilig ausgeführt sein. Die Federelemente können beispielsweise als extra Teil ausgeführt sein oder in dem mechanischen Verbindungselement integriert sein.

In Weiterbildung der Erfindung weist das Verbindungselement mindestens zwei Federelemente auf, wobei die Federelemente unterschiedliche Federkonstanten aufweisen.

Bei einer Schwingungsanregung des Lichtvorhangs ist der Lichtvorhang dann widerstandsfähiger, da es keine einzelne definierte Resonanzfrequenz gibt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Lichtvorhang an einem Förderband;
- Figur 2 bis 4: jeweils einen Lichtvorhang mit Elektronikkarten und mechanischen Verbindungselementen;
- Figur 5: zwei Elektronikkarten;
- Figur 6: einen Lichtvorhang mit Elektronikkarten und mechanischen Verbindungselementen-

In den nachfolgenden Figuren sind identische Teile mit identischen Bezugszeichen versehen.

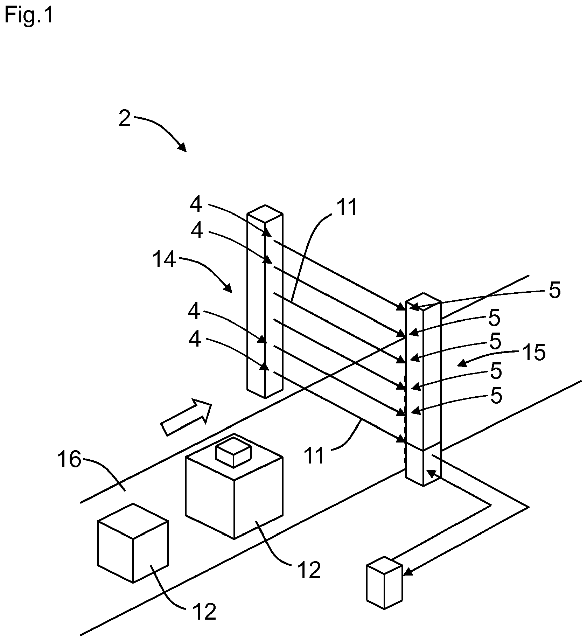

Figur 1 zeigt einen Lichtvorhang 2 zur Vermessung von Objekten 12 und/oder zur Überwachung eines Gefahrenbereichs einer Maschine, umfassend eine Sendeeinheit 14 mit einer Vielzahl von Lichtstrahlen 11 emittierenden Lichtsendern 4 und einer Empfangseinheit 15 mit einer Vielzahl von Lichtstrahlen 13 empfangenden Lichtempfängern 5 zur Erfassung der Objekte 12. Weiter ist eine Steuer- und Auswerteeinheit vorgesehen, welche ausgebildet ist, bei Erfassung eines Objektes 12 ein Messsignal beispielsweise für die Maschine zu generieren, wobei die Steuer- und Auswerteeinheit ausgebildet ist, bei Erfassung eines Objektes 12 Daten zu dem Objekt 12 auszugeben, beispielsweise die Objekthöhe und/oder Objektdimensionen.

Der Lichtvorhang 2 ist gemäß Figur 1 direkt über einem Förderband 16 angeordnet, so dass ein Abstand zwischen dem Lichtstrahl 11 und dem Förderband 16 minimal ist. Der Abstand zwischen dem letzten Lichtstrahl 11 und dem Förderband 16 wird auch als Blindbereich bezeichnet. Ein kleiner Blindbereich und dessen garantierte Größe führen dazu, dass der Lichtvorhang bündig an Flächen verbaut werden kann und damit nah an diesen Flächen gemessen werden kann. Der Lichtvorhang 2 kann dadurch auch platzsparend eingesetzt werden, da die gesamte Länge des Lichtvorhangs 2 nutzbar ist.

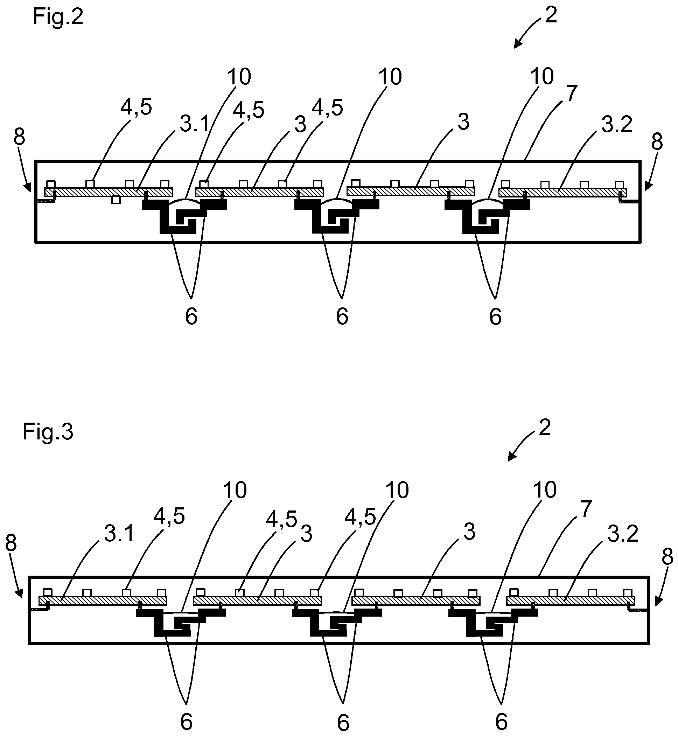

Figur 2 zeigt einen Lichtvorhang 2, mit wenigstens drei in einer Längsrichtung hintereinander angeordneten Elektronikkarten 3, auf denen mehrere Lichtsender 4 und/oder Lichtempfänger 5 in Reihe angeordnet sind, wobei die Elektronikkarten 3 jeweils durch ein mechanisches Verbindungselement 6 miteinander verbunden sind und die Elektronikkarten in einem Gehäuse 7 gehalten sind, wobei das Gehäuse 7 als Profilgehäuse ausgebildet ist, wobei die erste Elektronikkarte 3.1 und letzte Elektronikkarte 3.2 in Längsrichtung an dem jeweiligen Gehäuseende 8 fixiert ist, so dass der letzte Lichtsender 4 und/oder Lichtempfänger 5 der ersten Elektronikkarte 3.1 und der letzten Elektronikkarte 3.2, welcher an dem Gehäuseende 8 liegt, einen festen definierten Abstand zum Gehäuseende 8 aufweist, wobei das Verbindungselement 6 einen Minimalabstand und einen Maximalabstand zwischen den Elektronikkarten 3 begrenzen. Dabei ist der Maximalabstand größer als der Minimalabstand.

In dem Lichtvorhang 2 sind dabei mindestens drei Elektronikkarten 3 oder Leiterplatten angeordnet. Gemäß Figur 2 sind vier Elektronikkarten angeordnet.

Eine Fixierung der endseitigen Elektronikkarten 3.1 und 3.2 kann beispielsweise direkt über ein Loch in der Elektronikkarte 3 und einem Fixierelement im Gehäuse 7 bzw. Gehäuseendstück stattfinden oder indirekt über ein zusätzliches Teil, welches die Elektronikkarte 3 mit dem Gehäuse 7 bzw. dem Gehäuseendstück verbindet. Damit besitzen die ersten bzw. letzten Lichtsender 4 bzw. Lichtempfänger 5 auch bei Temperaturänderungen den gleichen Abstand zum Gehäuseende.

Durch das mechanische Verbindungselement 6 wird ein Abstand zwischen den Elektronikkarten 3 gebildet, so dass sich die Elektronikkarten 3 bei maximaler Temperaturänderung und Worst-Case Toleranzen maximal berühren.

Werden drei oder mehr Elektronikkarten 3 verwendet, haben die nicht an den Enden des Gehäuses liegenden Elektronikkarten 3, abhängig von der Temperatur und den vorliegenden Toleranzen, ein gewisses Spiel, sich längs des Lichtvorhanges zu bewegen. Je mehr Elektronikkarten 3 verwendet werden, umso größer wird der größtmögliche Spalt an einer Position, nämlich dann, wenn alle Elektronikkarten 3 bis auf eine fixierte Elektronikkarte 3 am Ende, zusammengeschoben werden würden. Dieser Spalt würde das Auflösungsvermögen des Lichtvorhangs 2 verschlechtern, da die Auflösung vornehmlich vom Abstand der Lichtsender 4 zueinander bzw. der Abstand der Lichtempfänger 5 zueinander bestimmt wird.

Das mechanische Verbindungselement 6 verfügt über mechanische Elemente, welche einen maximalen Abstand zwischen zwei Elektronikarten 3 begrenzen. Weiter weist das mechanische Verbindungselement 6 mechanische Elemente auf, welche einen minimalen Abstand zwischen den Elektronikkarten 3 begrenzen.

Gemäß Figur 2 weist das Verbindungselement 6 mindestens ein Federelement 10 auf. Das Federelement 10 sorgt dafür, dass die Elektronikkarten 3 gegenseitig vorgespannt sind. Dabei sind die Federn beispielsweise als Zugfedern oder Druckfedern ausgebildet. Im Falle von Zugfedern werden die Elektronikkarten 3 zueinander gezogen und im Falle der Druckfedern werden die Elektronikkarten 3 voneinander abgestoßen. Der Abstand zwischen den Elektronikkarten 3 wird durch die Federelemente 10 jedoch definiert voreingestellt, so dass nahezu kein Spiel vorhanden ist.

Das mechanische Verbindungselement 6 kann auch zweiteilig ausgeführt sein. Die Federelemente 10 können beispielsweise als extra Teil ausgeführt sein oder in dem mechanischen Verbindungselement integriert sein.

Gemäß Figur 2 ist der Lichtvorhang mit der Optikkette bestehend aus den bestückten Elektronikkarten 3 und den mechanischen Verbindungselementen 6 bei einer Normaltemperatur von beispielsweise 20 Grad Celsius dargestellt. Die Federelemente 10 sind in einem entspannten Zustand dargestellt.

Figur 3 zeigt den Lichtvorhang aus Figur 2 bei einer Maximaltemperatur. Die Federelemente 10 sind negativ gespannt, bzw. mit einer Zugkraft beaufschlagt. Die mechanischen Elemente des mechanischen Verbindungselements sind in der Position des maximalen Abstandes dargestellt.

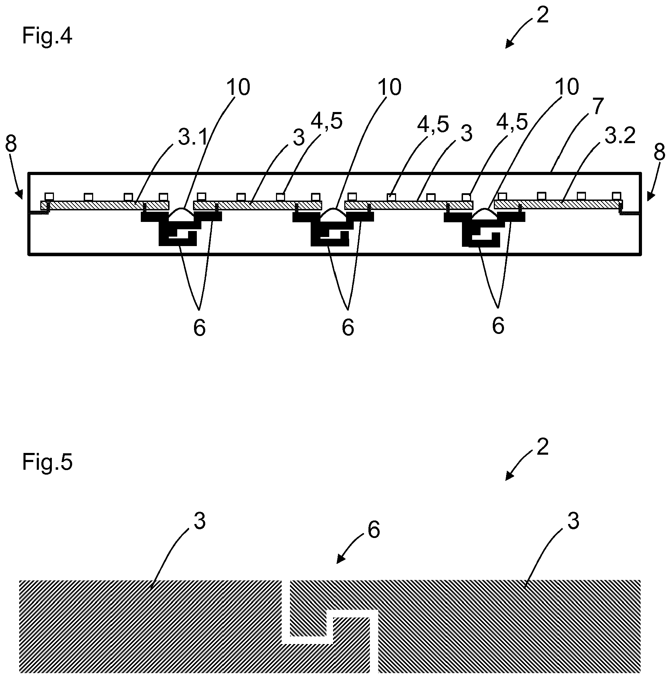

Figur 4 zeigt den Lichtvorhang aus Figur 2 bei einer Minimaltemperatur. Die Federelemente 10 sind positiv gespannt, bzw. mit einer Druckkraft beaufschlagt. Die mechanischen Elemente des mechanischen Verbindungselements sind in der Position des minimalen Abstandes dargestellt.

Gemäß Figur 5 ist das mechanische Verbindungselement 6 einstückig mit der Elektronikkarte 3 verbunden. Die Gewährleistung des minimalen und maximalen Abstands zwischen den Elektronikkarten 3 wird dabei direkt beispielsweise über eine Kontur in der Elektronikkarte 3 gebildet. Hierzu werden die Elektronikkarten 3 beispielsweise in einer Nut des Gehäuses geführt.

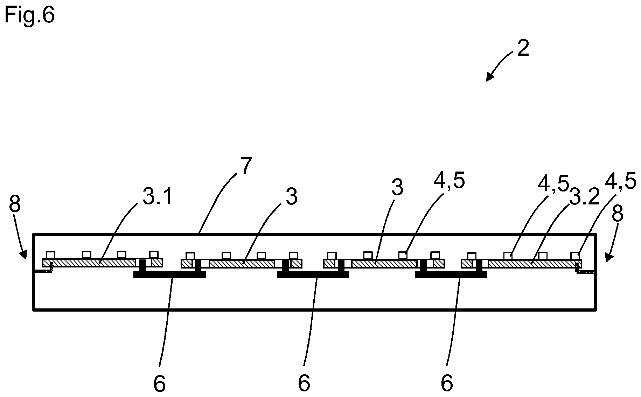

Die Minimal- und Maximalabstände zwischen den Elektronikarten 3 werden gemäß Figur 6 beispielsweise durch Langlöcher in den Elektronikkarten 3 und dem mechanischen Verbindungselement 6, welches nicht variabel in der Länge ist, gebildet, wobei das mechanische Verbindungselement 6 mit Stiften mit den Langlöchern der Elektronikkarte 3 verbunden ist. Das Langloch definiert zusammen mit dem Stift des mechanischen Verbindungselements 6 die Minimal- und Maximalabstände der Elektronikkarten 3.

### Bezugszeichen:

2 Lichtvorhang
3 Elektronikkarte
3.1 erste Elektronikkarte
3.2 letzte Elektronikkarte
4 Lichtsender
5 Lichtempfänger
6 mechanisches Verbindungselement
7 Gehäuse
8 Gehäuseende
10 Federelement
11 Lichtstrahlen
12 Objekte
14 Sendeeinheit
15 Empfangseinheit
16 Förderband

## Patentansprüche

1. Lichtvorhang (2) mit einem Gehäuse (7), mit wenigstens drei in einer Längsrichtung hintereinander angeordneten Elektronikkarten (3), auf denen mehrere Lichtsender (4) und/oder Lichtempfänger (5) in Reihe angeordnet sind, wobei die Elektronikkarten (3) jeweils durch ein mechanisches Verbindungselement (6) miteinander verbunden sind und die Elektronikkarten (3) in dem Gehäuse (7) gehalten sind,
wobei das Gehäuse (7) als Profilgehäuse ausgebildet ist,
wobei
die erste Elektronikkarte (3.1) und letzte Elektronikkarte (3.2) in Längsrichtung an dem jeweiligen Gehäuseende (8) fixiert sind, so dass der letzte Lichtsender (4) und/oder Lichtempfänger (5) der ersten Elektronikkarte (3.1) und der letzten Elektronikkarte (3.2), welcher an dem Gehäuseende (8) liegt, einen festen definierten Abstand zum Gehäuseende (8) aufweist, **dadurch gekennzeichnet, dass** das Verbindungselement (6) einen Minimalabstand und einen Maximalabstand zwischen den Elektronikkarten (3) begrenzt, wobei der Maximalabstand größer als der Minimalabstand ist.

2. Lichtvorhang (2) nach Anspruch 1, **dadurch gekennzeichnet, dass** das Verbindungselement (6) einstückig mit der Elektronikkarte (3) verbunden ist, wobei die Elektronikkarten in einer Nut des Gehäuses geführt sind.

3. Lichtvorhang (2) nach einem der vorhergehenden Ansprüche, **dadurch gekennzeichnet, dass** das Verbindungselement (6) mindestens ein Federelement (10) aufweist.

4. Lichtvorhang (2) nach einem der vorhergehenden Ansprüche, **dadurch gekennzeichnet, dass** das Verbindungselement (6) mindestens zwei Federelemente (10.1, 10.2) aufweist, wobei die Federelemente unterschiedliche Federkonstanten aufweisen.

## Claims

1. A light curtain (2) having a housing (7) having at least three electronic cards (3) which are arranged behind one another in a longitudinal direction and on which a plurality of light transmitters (4) and/or light receivers (5) are arranged in series, wherein the electronic cards (3) are each connected to one another by a mechanical connection element (6) and the electronic cards (3) are held in the housing (7); and
wherein the housing (7) is formed as a profile housing,
**characterized in that**
the first electronic card (3.1) and the last electronic card (3.2) are fixed to the respective housing end (8) in the longitudinal direction so that the last light transmitter (4) and/or light receiver (5) of the first electronic card (3.1) and of the last electronic card (3.2), said last light transmitter and/or light receiver disposed at the housing end (8), has a fixed defined spacing from the housing end (8), **characterized in that** the connection element (6) bounds a minimal spacing and a maximum spacing between the electronic cards (3), with the maximum spacing being greater than the minimal spacing.

2. A light curtain (2) in accordance with claim 1, **characterized in that** the connection element (6) is connected to the electronic card (3) in one piece, with the electronic cards being guided in a groove of the housing.

3. A light curtain (2) in accordance with one of the preceding claims, **characterized in that** the connection element (6) has at least one spring element (10).

4. A light curtain (2) in accordance with any one of the preceding claims, **characterized in that** the connection element (6) has at least two spring elements (10.1, 10.2), with the spring elements having different spring constants.

## Revendications

1. Barrière immatérielle (2) comprenant un boîtier (7) avec au moins trois cartes électroniques (3) disposées l'une derrière l'autre dans la direction longitudinale, sur lesquelles plusieurs émetteurs de lumière (4) et/ou récepteurs de lumière (5) sont disposés en série, les cartes électroniques (3) étant chaque fois reliées entre elles par un élément de liaison mécanique (6) et les cartes électroniques (3) étant maintenues dans le boîtier (7),
le boîtier (7) étant réalisé sous la forme d'un boîtier profilé,
la première carte électronique (3.1) et la dernière carte électronique (3.2) dans la direction longitudinale étant fixées à l'extrémité de boîtier (8) respective, de sorte que le dernier émetteur de lumière (4) et/ou récepteur de lumière (5) de la première carte électronique (3.1) et de la dernière carte électronique (3.2), qui est situé à l'extrémité de boîtier (8), présente une distance définie fixe par rapport à l'extrémité de boîtier (8), **caractérisée en ce que** l'élément de liaison (6) limite une distance minimale et une distance maximale entre les cartes électroniques (3), la distance maximale étant supérieure à la distance minimale.

2. Barrière immatérielle (2) selon la revendication 1, **caractérisée en ce que** l'élément de liaison (6) est relié d'une seule pièce à la carte électronique (3), les cartes électroniques étant guidées dans une rainure du boîtier.

3. Barrière immatérielle (2) selon l'une des revendications précédentes, **caractérisée en ce que** l'élément de liaison (6) présente au moins un élément ressort (10).

4. Barrière immatérielle (2) selon l'une des revendications précédentes, **caractérisée en ce que** l'élément de liaison (6) présente au moins deux éléments ressorts (10.1, 10.2), les éléments ressorts présentant des constantes de ressort différentes.
